# EUROPEAN PATENT APPLICATION

(11) **EP 1 489 400 A2**
(43) Date of publication of application: **22.12.2004**
(21) Application number: 04014173.1
(22) Date of filing: 17.06.2004
(51) Int. Cl.: G01M 1/02

(54) **Balancing machine including a wheel lifting device**

(30) Priority: 20.06.2003 DK 200300930
(71) Applicant: HJORT-HANSEN, Arne, Stilling, DK-8660 Skanderborg (DK)
(72) Inventor: HJORT-HANSEN, Arne, Stilling, DK-8660 Skanderborg (DK)
(74) Representative: Knudsen, Christian Egtved

(57) **Abstract**

By wheel lines for mounting and dismounting and balancing of wheels, particularly for cars, in connection with the mounting and dismounting the wheel on the shaft of a balancing machine forming part of the wheel line, a wheel centering lifter (32) is typically used for performing handling of the wheels in a weight neutral way to a weight neutral working level, simultaneously with a horizontally oriented displacement of the wheel can be performed. Such prior art wheel centering lifters (32) have, however, a voluminous structure implying that they sometimes cannot be used with all types of balancing machines, as there is simply not room enough to mount this under the screen of the balancing machine.

Thus there is specified a wheel centering lift device (32) which is peculiar in that the means for performing the horizontal displacement of the support beam (24) is integrated in a support beam 34 situated under the support plate (24). This implies such a substantial reduction of the installation dimensions of the wheel centering lift device that its cabinet (28) can be built in under the underside of the ramp of the wheel line, and furthermore it may be integrated in the balancing machine itself in a special embodiment.

## Description

The present invention concerns a device for temporary support of a wheels in connection with centering wheels for mounting on a shaft of a balancing machine and including a lift system for receiving the wheel at a loading level over a working level, and which can be made to perform a vertically oriented displacement between the said levels and a lower level thereunder, and where the lift system is displaced vertically by means of a pneumatic piston, the cylinder which being of the double-acting type, which via control means for supply and discharge of pressurised air form the said cylinder is controlled on the basis of action of force from the wheel, and where the cylinder constitutes a part of a voluminous pressure chamber that allow displacement of the lift system above the said working levels with an associated insignificant change in the air pressure in the pressure chamber system.

US 4,974,723, Wittersheim, discloses a lift mechanism provided for lifting vehicle wheels in horizontal orientation through use of a fluid actuator driven parallelogram linkage. The fluid actuator includes an adjustable stop for setting the extent of the wheel lift travel below a fixed amount set by a stop carried between the linkage and the actuator.

US 5,269,644, Vatel, discloses a load balancing manipulator, which allows the user great flexibility in moving heavy objects from place to place. The publication shows a base having an upstanding post to which is attached a pivoting arm having a second pivoting arm attached at a distal end of the first-mentioned arm. At the end of the second arm, a load manipulator is provided including a pneumatic cylinder-piston arrangement and a sleeve actuator for switches which, when closed, activate solenoid valves which control supply and exhaust of air to and from the cylinder, respectively. In the preferred embodiment, an electromagnet is used to hold a load in place. Battery back-up and load safety mechanism for the electromagnet are also provided.

WO 99/40406, Hjorth-Hansen, discloses a wheel lifter for the balancing of serviced vehicle wheels, by means of which the wheel can be raised from ground level to a level, in which the wheel, standing on a displaceable sledge, is insertable onto the rotation spindle of a balancing machine. The raising height is rather short, and the invention provides for a wheel lifter with such an increased lifting height that is usable even for the lifting of the wheel sufficiently for the wheel to be laid down on the rotary table of a tyre changer machine placed next to the balancing machine, as well as for receiving the serviced wheel and bringing it down to the mounting position at the balancing spindle. The wheel is supported on a carrier plate which at the high lift may collide with parts of the balancing machine, but according to the invention the carrier plate and its associated support is arranged entirely outside the side limitation, only with the carrier plate being displaceable for bringing the downloaded wheel to the balancing spindle in being supported by a projectable telescopic system, which in its normal position is located substantially entirely underneath the carrier plate.

From US 5,821,416 is known a device of the kind mentioned in the introduction, where the device is equipped with a support plate which is particularly suited for use in connection with handling wheels for automobiles. The device is here thought to be placed as an independent unit in connection with a wheel line for workshops where change of tyres on wheels is performed, where the wheels, provided with new tyres, are finally balanced before they are mounted on a vehicle. The use of the device which also in the following at random is called a wheel centering lifter, facilitates the work with correct disposition of a wheel on the shaft of a balancing machine, as the wheel can be disposed and held at a desired level simultaneously with it is displaced horizontally in over the shaft of the balancing machine. This means that the one doing the work will not be subjected to perform heavy lifting in awkward working positions, as well as by using the wheel centering lifter, more time will be left for correctly placing the wheel on the shaft of the balancing machine.

A wheel line typically comprises a releasing device, a tyre mounting machine, a pump station and associated therewith a table cart on which wheels are transported from the pump station to the carrier plate of the wheel centering lifter for lifting/turning the wheel for performing an easy and unencumbered transfer and fastening of the shaft on a balancing machine, where the system included in the above patent for performing a weight-independent lift is utilised herefore, and for performing the subsequent lowering of the wheel to floor level after finishing the balancing process.

The lifting device specified in the US publication ('416) is suited as such for the purpose, and has also found wide application in connection with various wheel lines. However, the lift construction itself, which is a part of the wheel centering lifter, is of such voluminous construction that it takes up inexpediently much space in the length of the wheel line, whereby the distance between the table cart and the balancing machine shaft becomes relatively large, which is inexpedient due to the desire for short transport distances on the wheel line, and as consequence of the desire to minimise the consumption of space for the wheel line. Furthermore, the presence of the lift may simply be rendered impossible due to the fact that there is not the required space for the wheel centering lifter to be mounted under the screen belonging to the balancing machine.

The voluminous construction consists in the vertically displacing part itselft consisting of a mainly rectangular support beam in which is suspended a horizontally sliding carrier arm with a rotatably j journalled support plate for a wheel. The said support beam is supported on a vertically displacing frame which is connected with the pneumatic piston for performing a vertical displacement of the carrier beam, the frame being guided on two spaced parallel vertically oriented guide pipes by means of 12 roller bearings. Altogether a voluminous construction taking up much space in a area of a wheel line where the space conditions are very scarce beforehand and which furthermore constitutes a limitation to the possibilities of utilising the pneumatic piston enabling the weight-independent lifting and lowering of the carrier arm with or without a load on the support plate.

It is thus the purpose of the present invention to indicate a wheel centering lifter/lifting device of the kind specified in the introduction, preferably for use in connection with a wheel line having a less voluminous construction.

This purpose is achieved by the lift system of the lifting device of the kind specified in the introduction is peculiar in that the lift system is constituted by a support member connected with and projecting from the free end of the piston, the free end of which projecting into a slot in a guide frame oriented in parallel with the piston and connected with a support holder which is suspended on at least two ball bushings on a vertically oriented pipe, on which support holder there is suspended a first arm projecting perpendicularly to the support member and connected with a supporting beam by a support plate, which is horizontally displacing by means of displacing means, for carrying the wheel.

Hereby several advantages are achieved, i.a. by the construction of the lift system, a change in the disposition of the displacing means for performing a horizontally oriented displacing of the support plate from the area close to the pneumatic lifting cylinder to the support beam itself which is disposed immediately under the support plate where the space conditions are less critical. Besides, the moving of the displacing facilities allows a lighter construction implying that it becomes possible to reduce the number of bearings to four, namely two ball bushings and two roller bearings in contact with opposite sides of the guide frame instead of the previously needed 12 roller bearings in the prior art construction.

The changed construction also implies that the depth dimension for the lifting device according to the invention is considerably reduced and at least with the depth of the support beam, and that the installation width for the lifting device is reduced to the width of the pneumatic lifting cylinder with the voluminous pressure chamber and the guide frame of the lifting device.

With the purpose of achieving a suitable displacing of the support plate and avoiding dirtying of the displacing means, the support beam can be constituted by a C-shaped section with the closed part facing upwards and including a first and a second lug, the free ends of which facing each other, and where the displacing means are constituted by a carriage with at least two pairs of rollers which are supported by the mutually facing lug parts of the C-shaped section, and where at least one of the roller pairs is provided with a spring loaded friction brake.

Hereby is achieved that the rollerways and the rollers on the carriage are protected against strikes and dirtying during use as the rollers are running on the inwards directed lugs of the C-shaped section. Furthermore, by the spring loaded friction brake there is achieved a controlled sliding horizontally oriented displacement of the carriage on the support beam.

With the intention of enabling turning e.g. a wheel 180° about its own vertically oriented bisecting axis on the support plate, this may be rotatably journalled on the upwards facing side of the carriage.

With the purpose of achieving the possibility of adjusting the position of the support beam in relation to a shaft of the balancing machine and the distance between the support beam and the pneumatic lifting cylinder with the voluminous pressure chamber and the guide frame of the lifting device, the support beam can be releasably fastened to the first arm so that the support beam is adjustable in lateral direction within a given range in relation to the orientation of the longitudinal axis of the support beam.

Furthermore, hereby is achieved a possibility of providing the lifting device with a support beam having an extent which is oriented in parallel with and in continuation of the pneumatic lifting cylinder with the voluminous pressure chamber and the guide frame of the lifting device.

By a special arrangement of the support beam where it is releasably fastened to the first arm, it will be possible to use the same support beam in the above described embodiment and in an embodiment where the support beam extends in front of the pneumatic lifting cylinder with the voluminous pressure chamber and the guide frame of the lifting device by a simple turning of the support beam around its longitudinal axis. Hereby is achieved a more universal installation possibility for the lifting device according to the invention.

With the intention of achieving possibility of integrating the lifting device according to the invention with other units in e.g. a wheel line, the lifting device may be adapted so that side of the guide frame facing away from the air cylinder constitutes the first side limitation. By this is achieved the possibility of mounting the lifting device according to claim 1 - 6 directly on the outer side/frame of a balancing machine.

The more compact, simple and less space consuming construction of the lifting device according to the invention implies further application options for it, and particularly for using the weight-independent lifting device. By the invention it has furthermore been acknowledged that a balancing machine of the current types may contain a lifting system according to the invention so that it includes a lifting device according to claims 1- 5 which is integrated within the frame of the balancing machine, with the support beam projecting from the frame of the balancing machine, oriented in parallel with and under the shaft of the balancing machine and operating in a range between the base upon which the balancing machine is placed and at a level under the shaft of the balancing machine.

In that connection it is to be noted that balancing machines, including integrated lift devices for use in mounting wheels on the shaft of the balancing machine, are known in embodiments where a displacement of the support beam is performed and thereby the support plate between two outer points by activating operating means for controlling supply and discharge of pressurised air to and from the air cylinder performing the lifting of the support beam, but it has hitherto not been known to perform integration of a lifting device of the kind indicated in a balancing machine due to the voluminous construction of the lifting device. However, this problem is solved by the lifting device according to the invention, and it is then possible to utilise the advantages connected with using the weight-independent support of objects at weight neutral working levels in combination with balancing machines of the known types.

The invention is explained more closely in the following with reference to the drawing, where:
- Fig. 1: is a plan view of a wheel line, including a prior art device for temporary support of objects/wheels;
- Fig. 2: is a perspective view of a first embodiment of a device for temporary support of objects/wheels according to the invention, as seen obliquely from the front;
- Fig. 3: is a front view of the lifting device shown in Fig. 1;
- Fig. 4: is a plan view of a second embodiment of the device for temporary support of objects/wheels according to the invention shown in Fig. 2;
- Fig 5: is front view of the design of the device for temporary support of objects/wheels according to the invention shown in Fig. 4;
- Fig. 6: is an end view of the embodiment of the device for temporary support of objects/wheels according to the invention shown in Figs. 4 and 5;
- Fig. 7: is a side view of a detail of the support beam with its carriage of the device for temporary support of objects/wheels according to the invention;
- Fig. 8: is a sectional view on the line A-A in Fig. 7;
- Fig. 9: shows how the lifting device/wheel centering lifter according to the invention may be mounted under a exit ramp on a wheel line;
- Fig. 10: is a perspective view of a balancing machine with an integrated device for temporary support of objects/wheels according to the invention; and
- Fig. 11: is a plan view of the balancing machine with the integrated device for temporary support of objects/wheel according to the invention.

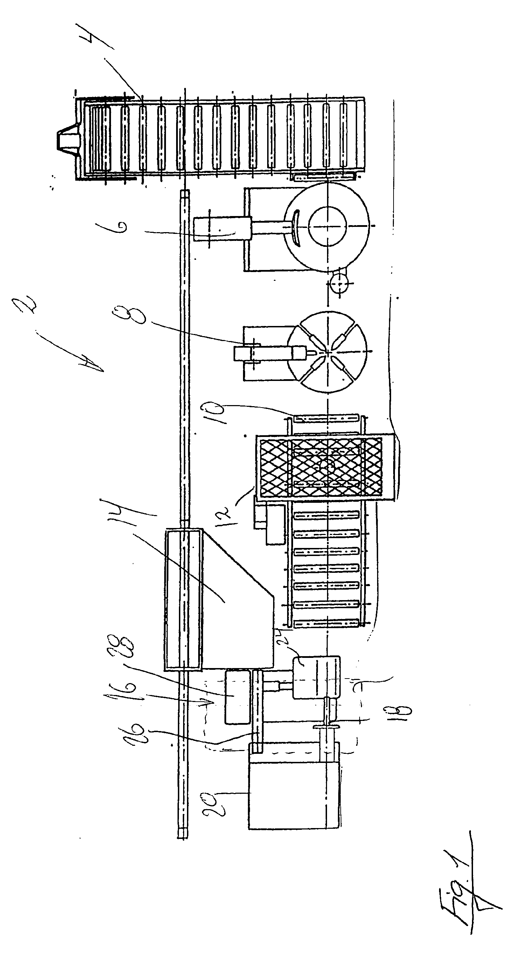

In Fig. 1 is seen a plan view of a known wheel line 2 for use in connection with changing, mounting and dismounting, pumping of tyres and balancing of wheels with tyres. In the shown embodiment, the wheel line 2 includes the following elements/machines. A supply table cart 4, a releasing device 6, a tyre changing machine 8, a table cart 10 with a pump station 12, a ramp 14 for arraying wheels to and from balancing, a wheel centering lifter 16 for temporary support of a wheel which is moved to and from the shaft 18, respectively, on a balancing machine 20.

As it appears from Fig. 1, the wheel centering lifter 16 is disposed in continuation of the ramp 14 which is necessary because that the displacing means 22 of the transfer unit for performing horizontal displacement of the support plate 24 are constituted by an edged frame 26 which again is carried by not shown vertically displacing frame structure by a pneumatic cylinder in the cabinet 28 of the device for temporary support of a wheel. The frame construction is guided on vertically oriented guide tubes by means of no less than twelve roller bearings.

The wheel centering lifter 16 is also capable of performing a temporary weight neutral vertical displacement of the support plate 24, as this is arranged with a pneumatic piston, the cylinder of which being of the double-acting type which via control means for supply and discharge of pressurised air from the cylinder on the basis of a relevant vertically directed action of force from the object, and where the cylinder constitutes a part of a voluminous pressurised air chamber allowing displacement of the lift system above the said working levels with an associated insignificant change in the air pressure of the pressurised air chamber system.

The disadvantage of the shown wheel centering lifter 16 is, however, its relatively large installation height and installation width as a consequence of the displacing means 22 for performing horizontal displacement of the support plate 24, necessitating disposition of the latter in continuation of the ramp 14. Furthermore, the transfer unit 16 may also take up space in the area around the shaft 18 of the balancing machine 20 so that some types of balancing machines 20 can only be used together with the wheel centering lifter 16 in the shown embodiment, as this is blocking for the free movement of its screen 30.

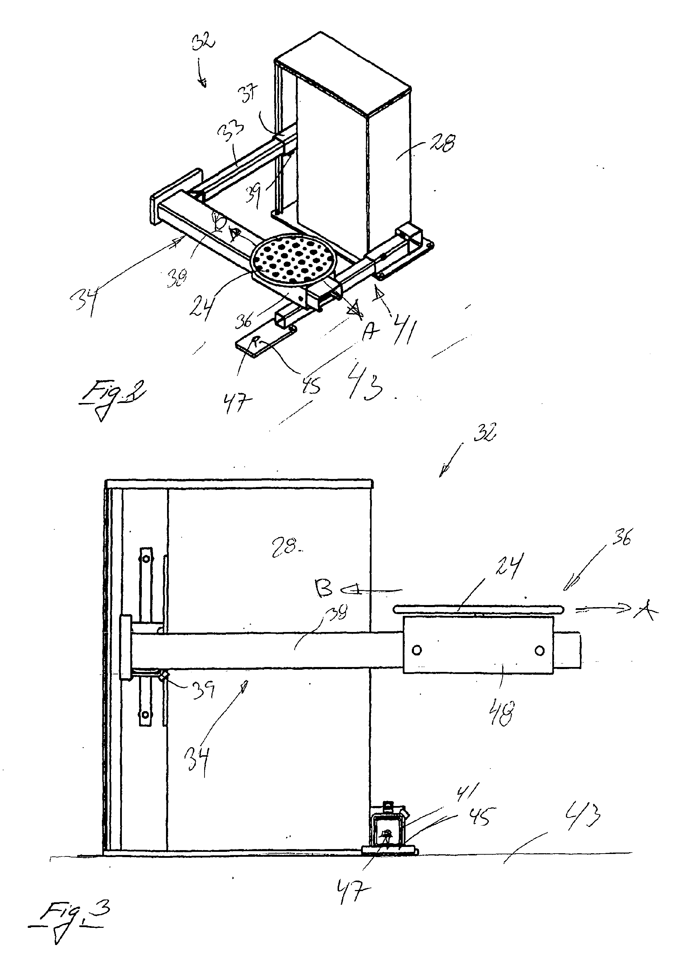

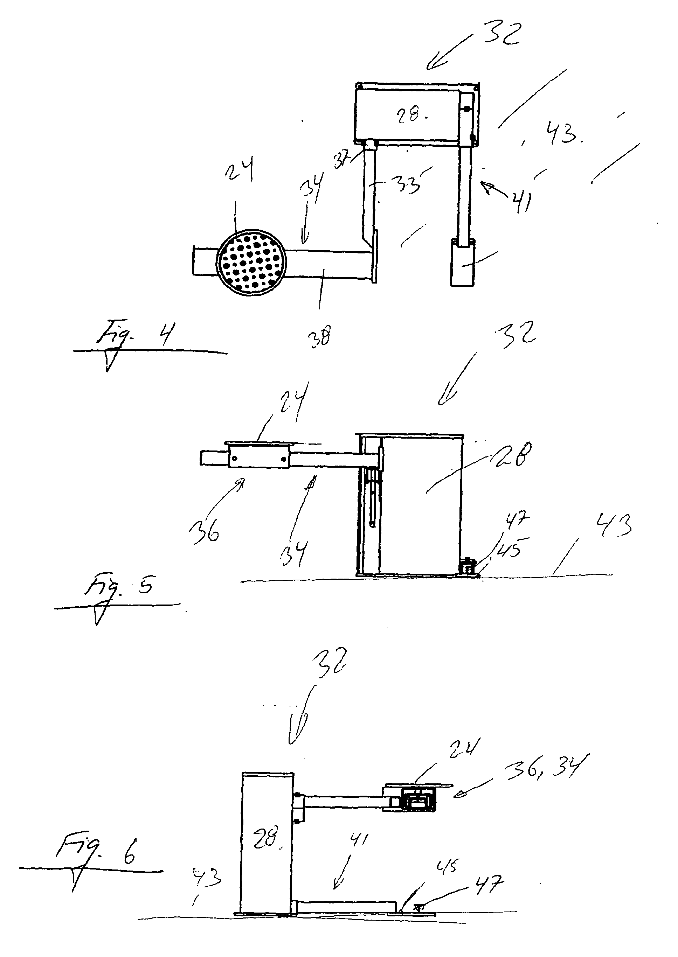

In Figs. 2 and 3 is shown an embodiment of a wheel centering lifter 32 according to the invention for temporary support of wheel 35 (cf. Fig. 10) with different weights in a weight-independent way at weight neutral working levels within a given range of working levels according to the invention. It is noted that the voluminous construction of the displacing means 22 for performing a horizontally oriented movement of the support plate 24 does not exist, as the horizontal displacement of the support plate 24 in horizontal direction (cf. arrows A and B) occurs on the supporting beams 34 of the support plate 24.

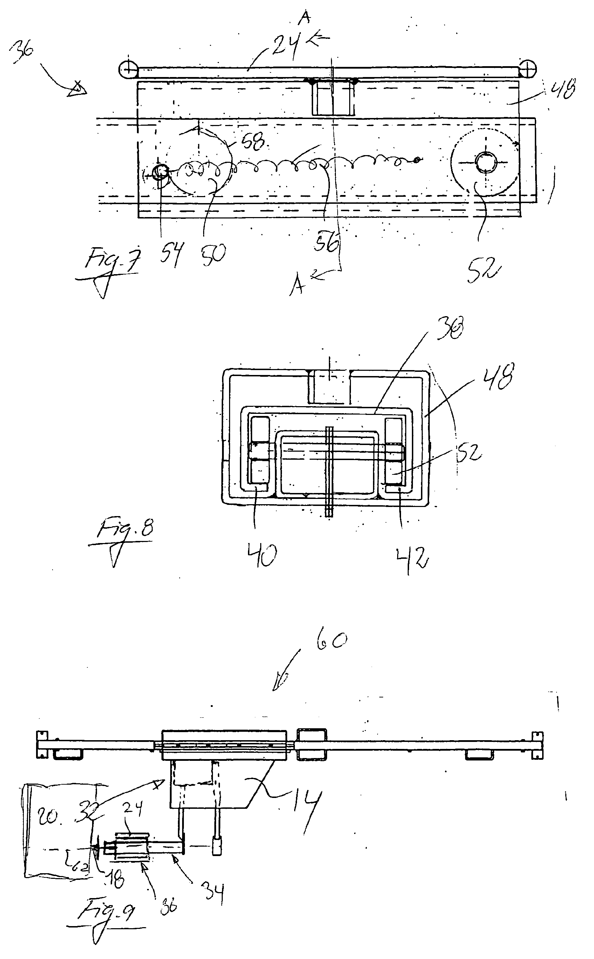

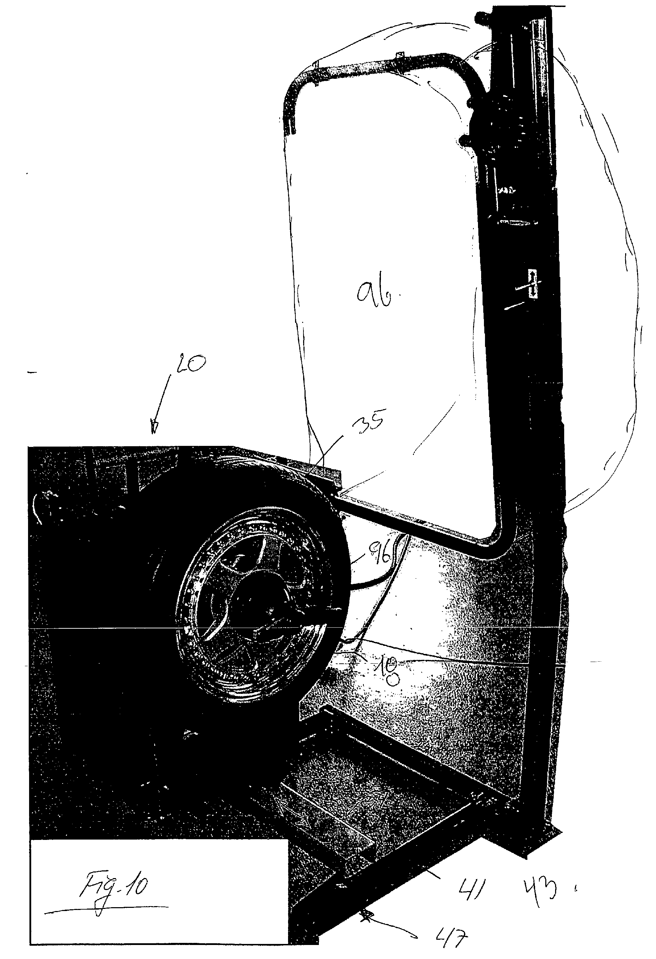

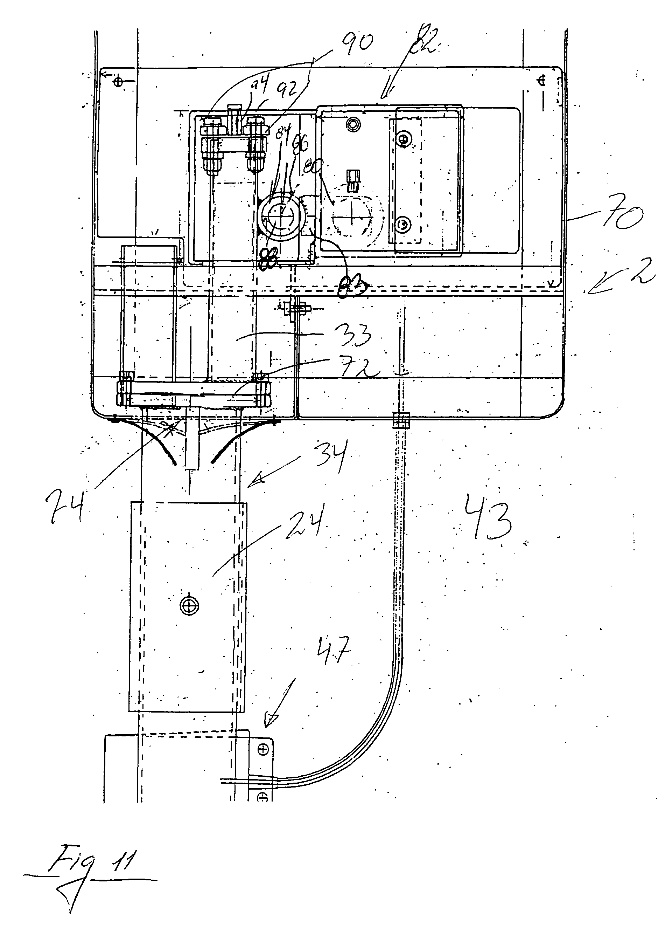

It is furthermore noted that the support beam 34 in the embodiment of the wheel centering lifter 32 according to the invention shown in Figs. 2 and 3 is oriented so that it extends in the area in front of the wheel centering lifter. In Figs. 4, 5 and 6 is shown an embodiment of the wheel centering lifter 32 where the supporting beams 34 is oriented so that it extends in continuation of the cabinet 28. The shown embodiments also includes a projecting, length adjusting arm 41 at level with the base 43 on which the wheel centering lifter 32 is placed. At the free end of the arm 41, the arm includes a plate 45 for an activation switch 47 for the wheel centering lifter 32.

In the shown embodiment, the support plate 24 is rotatably suspended to the top side of a carriage 36, but may in other embodiments be permanently mounted at the top side of the carriage.

The carriage is suspended displacing in a C-shaped section 38 constituting the support beam itself, cf. Figs. 2 and 8, and oriented with the closed part facing upwards. The C-shaped section 38 includes a first lug 40 and a second lug 42, the free ends 44, 46 of which facing each other. The carriage 36, which is constituted by a tubular four-edged section 48, includes, as it appears from Figs. 7 and 8, two sets of rollers 50, 52 supported on the mutually facing lug members 40, 42 of the C-shaped section 38. By the selected orientation of the C-section 38 constituting the support beam is achieved protection of the interfaces between the rollers 50, 52 and the mutually facing lugs 40, 42 of the C-shaped section, providing that the carriage will slide easily and unencumbered on the support beam.

As outlined in Fig. 7, at least one of the wheel pairs 50 are provided with a springloaded friction brake, which in the shown embodiment is constituted by a rod 54 which is tightened by means of a spring 56 against the periphery 58 of the rollers 50. The brake entails that the carriage 36 will move calmly under horizontal displacement on the supporting beam 34, compared with a carriage without brake which will run against an end stop with approximately the speed at which the wheel placed on the support plate 24 is displaced. This would cause unwanted jolts as well as inserting the rim of the wheel in over the shaft 18 of the balancing machine without retardation of the speed of the slide may imply the shaft colliding with the rim at an unwanted spot on the rim, possibly damaging the latter.

In Fig. 9 is shown a wheel centering lifter 32 according to the invention integrated in a wheel line 60, including an exit ramp 14 similar to the wheel line 2 shown in Fig. 1. As it appears from Fig. 9, the wheel centering lifter 32 is built in below the underside of the exit ramp which is possible due the lesser installation height of the wheel centering lifter 32 according to the invention. The disposition of the support plate 24 on the carriage 36 in relation to the shaft 18 on a balancing machine forming part of the wheel line, is furthermore outlined in the Figure. It is certain that the wheel centering lifter 32 will be placed so that the centre of the support plate 24 will be disposed opposite the centre axis 62 of the shaft 18 of the balancing machine 20. Sometimes it may be necessary to perform an adjustment of the support plate 24 in lateral direction, which can be done by displacing the support beam 34 itself in lateral direction by adjusting the length of the first arm 33 carrying the support beam by the first arm 33 being inserted in a tube 37 in which it is releasably fastened by clamping means 39.

The reduced installation dimensions of the wheel centering lifter 32 according to the invention imply that hereafter it will be possible to integrate it in a wheel balancing machine 20 as it appears from Figs. 10 and 11.

In Fig. 10 is seen a wheel balancing machine 20 of the known type with an integrated wheel centering lifter 32 according to the invention, whereby objects/wheels 35 with different weight can be supported in a weight-independent way at weight neutral working levels within a given range of working levels.

In Fig. 11 there is a top view of an embodiment of the wheel centering lifter 32, where this is integrated in the cabinet 70 on a balancing machine 20. In the shown embodiment, the support beam 34 is mounted on the first arm 33 by a flange connection 72, so that the first arm 33 and the support beam 34 are substantially oriented in continuation of each other. The support beam 34 is extending out through the side of the cabinet 70 in a slotted aperture 74 established therein, the side edge of which 76 being provided with inwards projecting strips 78 of flexible material allowing vertical displacement of the support beam 34 by actuation of the piston 80 on the lifting device 82.

In fig. 11 is also seen support members 83 that are connected with the support holder 84 with the roller bushings 86 which are journalled on a vertically oriented tube 88. In the shown embodiment, the first arm 33 is provided with rollers 90 at the end opposite the flange connection 72, running from a guide 94 projecting from the guide frame 92.

In Fig. 10 is furthermore seen how the wheel centering lifter 32 in no way are interfering with the screen 96 belonging to the balancing machine.

The function of the balancing machine 20 with the integrated wheel centering lifter 32 according to the invention is that a wheel 35 from the exit ramp 14 is placed on the support plate 24, after which the support plate is displaced towards the shaft 18 of the balancing machine at the same time as the rim 96 is centred about the shaft 18, by performing a weight neutral height adjustment by displacing the support beam 34 of the wheel centering lifter. Then rim/wheel 96, 35 is fastened to the shaft 18, and the support plate 24 is lowered by activation of the switch 47 which causes a pressure reduction on the piston 80 causing the support beam 34 to be lowered. Then the wheel 35 is balanced, and after the balancing procedure has been finished, the switch 47 is activated again, whereby the pressure on the piston is increased by supplying pressurised air whereby the support beam 34 is elevated so much that the support plate 24 is brought in contact with the wheel 35, which is then released from the shaft 18, and finally the wheel is lowered to the floor 43 by activating the switch 47. It is to be mentioned, that the wheel centering lifter 32 according to the invention is provided with a control system which is activated by actuating the switch for elevating and lowering the support beam 34.

## Claims

1. Device (16, 32) for temporary support of a wheels (35) in connection with centering wheels (35) for mounting on a shaft (18) of a balancing machine (20) and including a lift system (82) for receiving the wheel (35) at a loading level over a working level, and which can be made to perform a vertically oriented displacement between the said levels and a lower level thereunder, and where the lift system (82) is displaced vertically by means of a pneumatic piston (80), the cylinder which being of the double-acting type, which via control means for supply and discharge of pressurised air form the said cylinder is controlled on the basis of action of force from the wheel (35), and where the cylinder constitutes a part of a voluminous pressure chamber that allow displacement of the lift system (82) above the said working levels with an associated insignificant change in the air pressure in the pressure chamber system, **characterised in that** the lift system (82) is constituted by a support member (83) connected with and projecting from the free end of the piston (80), the free end of which projecting into a slot (74) in a guide frame (92) oriented in parallel with the piston (80) and connected with a support holder (84) which is suspended on at least two ball bushings (86) on a vertically oriented pipe (88), on which support holder (84) there is suspended a first arm (33) projecting perpendicularly to the support member (83) and connected with a supporting beam (34) by a support plate (24), which is horizontally displacing by means of displacing means, for carrying the wheel (35).

2. Device (16, 32) according to claim 1, **characterised in that** the support member (83) between the piston (80) and the support holder (84), alternatively the first arm (33), includes guide rollers (50, 52) which are in contact (40, 42) with facing sides of the guide frame (92).

3. Device (16, 32) according to claim 1 or 2, **characterised in that** the support beam (34) is constituted by a C-shaped section (28) with the closed part facing forwards, and including a first (40) and a second (42) lug, the free ends (44, 46) of which are facing each other, and where the displacing means are constituted by a carriage (36) with at least two pairs of rollers (50, 52) which are supported by the mutually facing lug parts (40, 42) of the C-shaped section (38), and where at least one of the roller pairs (50) is provided with a spring loaded friction brake (54, 56).

4. Device according to claim 3, **characterised in that** the support plate (24) is rotatably journalled at the upwards facing side of the carriage (36).

5. Device according to any of claims 1 - 4, **characterised in that** the support beam (34) is releasably fastened to the first arm (33) so that the support beam (34) is adjustable in lateral direction within a given range in relation to the orientation of the longitudinal axis of the support beam (34).

6. Device according to any of claims 1 - 5, **characterised in that** the side of the guide frame (92) facing away from the air cylinder constitutes the first side limit of the device (16, 32).

7. Device according to any of claims 1 - 6, **characterised in that** the side limit may be mounted directly on the outer side/frame of a balancing machine (20) by fastening means.

8. Device according to any of claims 1 - 7, **characterised in that** support frame is oriented perpendicularly to the first arm (33).

9. Balancing machine (20) including a lift device (16, 32) according to claim 1 - 8 at the outer side.

10. Balancing machine including a lift device (16, 32) according to claim 1 - 5 which is integrated in the frame of the balancing machine (20) with the support beam (34) projecting from the balancing machine frame, oriented in parallel with and under the shaft (18) of the balancing machine (20) and operating in a range between the base (43) upon which the balancing machine (20) is placed and a level under the shaft (18) of the balancing machine (20).

11. Device according to any of claims 1 - 7 for temporary support of objects with different weight in a weight-independent way at weight neutral working levels within a given range of working levels, particularly in connection with centering of wheels (35) for mounting on the shaft (18) of a balancing machine (20), and including a lift system (82) for receiving an object at a loading level over the working levels and which can be made to perform vertically oriented displacements between the said loading level, said range of working levels and a lower level thereunder, and where the lift system (82) is displaced vertically by means of a pneumatic piston (80), the cylinder being of the double-acting type, which via control means for supply and discharge of pressurised air form the said cylinder is controlled on the basis of relevant vertical action of force from the object, and where the cylinder constitutes a part of a voluminous pressure chamber that allow displacement of the lift system (82) above the said working levels with an associated insignificant change in the air pressure in the pressure chamber system, **characterised in that** the lift system (82) is constituted by a support member (83) connected with and projecting from the free end of the piston (80), the free end of which projecting into a slot (74) in a guide frame (92) oriented in parallel with the piston (80) and connected with a support holder (84) which is suspended on at least two ball bushings (86) on a vertically oriented pipe (88), on which support holder (84) there is suspended a first arm (33) projecting perpendicularly to the support member (83) and connected with a supporting beam (34) by a support plate (24), which is horizontally displacing by means of displacing means, for supporting an object.
